Europäisches Patentamt

(19) European Patent Office

Office européen des brevets

(11) Publication number: **0 214 753**
A2

(12) **EUROPEAN PATENT APPLICATION**

(21) Application number: **86305914.3**

(22) Date of filing: **31.07.86**

(51) Int. Cl.⁴: **E 02 B 3/12**

(30) Priority: **31.07.85 GB 8519253**
**12.03.86 CN 86102564**

(43) Date of publication of application:
**18.03.87 Bulletin 87/12**

(84) Designated Contracting States:
**BE DE FR GB IT NL SE**

(71) Applicant: **Waters, Charles Michael**
**Holly Cottage, Church Lane**
**Wroxham, Norfolk(GB)**

(72) Inventor: **Waters, Charles Michael**
**Holly Cottage, Church Lane**
**Wroxham, Norfolk(GB)**

(74) Representative: **Jones, William**
**Willow Lane House Willow Lane**
**Norwich Norfolk NR2 1EU(GB)**

(54) **Improved flexible blanket.**

(57) A segment (1) for forming part of a flexible blanket for protection or stabilisation of underwater structures and pipe lines, unstable beds and embankments, the blanket comprising a plurality of segments (1) arranged in one or more layers each one segment in height, the segments of the or each layer being disposed substantially contiguously at least at a median zone of their height dimension, each segment tapering substantially regularly from a maximum cross-section at said median zone (2) to a minimum cross section at one or both ends thereof and each segment being so bonded to each adjacent segment in the region of their respective median zones that the segments are held substantially contiguously but are free to pivot relative one to another about the bond in so far as is permitted by said taper, the arrangement of the tapes being such that each segment is capable of pivotting with more than one degree of freedom, in which each segment has a cross-section of a regular polygon of even numbered side and in which each segment is bonded to its adjacent segments by a series of flexible connecting members (5) a flexible connecting member extending from the centre of each side of the segment at the median zone (2) to the centre of the opposite side of the segment at the median zone (2), characterised in that the segment includes at least one hollow sleeve (11) extending from the centre of one side of the segment at the median zone to the centre of the opposite side of the segment at the median zone, through which said sleeve in use a flexible connecting member (5) may be passed.

Fig. 1

Fig. 3

IMPROVED FLEXIBLE BLANKET

Field of the Invention

The invention relates to a flexible blanket for the protection and stabilisation of underwater structures and pipelines.

The applicant's previously published United Kingdom Patent application, published under number 2 156 941A describes such a blanket. The flexible blanket comprises a plurality of segments arranged in one or more layers, each one segment in height. The segments are substantially contiguous at least at their median zone of their height dimension and they taper from a maximum cross section at the median zone to a minimum at one or both ends. The segments are bonded to each other so that they are held contiguous but are free to pivot about the bond as far as the taper allows. The arrangement of the tapers is such that each segment is capable of pivoting with more than one degree of freedom.

In this specification segments are shown which have a cross section of a regular polygon of even numbered side. The segments are bonded to each other by flexible connecting members. From the centre of each side of the segment at the median zone there extends a connecting member through to the centre of the opposite side of the segment at the median zone. Conveniently the flexible connecting member may comprise a rope which passes through a row of segments to connect them.

Two possible forms for the segments are described in Patent publication number 2 156 941. The first comprises a solid block of settable composition such as concrete cast with the connecting members which are ropes in place. Thus the concrete holds the ropes in place to form a layer of flexible blanket. The second possible form is one in which each segment comprises a hollow plastics shell filled with an infill of material denser than the shell.

The term "infill" is used to define any material which can be used to fill the plastics shell. It is used to distinguish from the "filler" which was used to define a constituent of the mixture making a solid block segment in the published Patent specification. In the applicant's earlier foreign applications relating to flexible blankets the material within the plastics shell has been described as a filler, but in this specification the term "infill" has been chosen deliberately. Within these definitions it is possible for the infill to be one of the materials that could make up a solid block, ie. a constituent of the infill could be a filler.

The hollow plastics shells are produced which have a bore at the centre of each edge of the shell at the median zone. In order to form the blanket the plastics shells are arranged in the required format and the flexible connecting members are passed through the bores. Once the ropes are in place the infill, usually concrete, is introduced into the hollow area of the plastics shells to hold the ropes in place and give the segment its weight.

In both cases it will be appreciated that the full layer of a blanket of a given shape and size will be produced at one time and subsequent enlargement or reduction of the blanket size or any change in its shape will be very difficult to effect because of the number of bonds existing between each segment and its adjacent segments. It is almost impossible to tailor a blanket to suit a particular customer's requirements.

The first aspect of the invention sets out to solve this problem and allow blankets of different shapes and sizes to be more readily formed.

In the flexible blankets described in UK Patent specification number 2 156 941A the median zone of each segment comprises a single plane so that contact between adjacent segments is along one line. This causes problems especially when the segment tapers towards both ends. In this case an edge is formed at the median zone which can mean that the edge of one segment may "ride up" over the edge of an adjacent segment.

The second aspect of the invention sets out to solve this second problem.

In UK published specification number 2 156 941A, where the cross section of the segment tapers from the median zone towards one of its ends, such tapering is regular and, therefore, the segment exhibits a series of outer planar faces extending from the median zone towards one of its ends. In the case where a flexible blanket made up of such segments is to be used on a seabed, a problem which often occurs is that debris drops onto the upper surface of the blanket whilst it is being installed. Such debris falls between adjacent segments and sits just above the median zone. If this region of the blanket is then to be placed in overbend, the two planar faces of the segment from the median zone to the upper edge of the segments are pushed to contact , thus "nutcrackering" the debris between the two planes which tends to weaken the segments at this area. The third aspect of the invention sets out to solve this problem.

When the flexible blankets described in UK patent publication number 2 156 941A are to be used on the seabed one problem that can arise is that of snagging by an anchor. If an anchor does snag into an edge of the blanket it can shift the blanket from the pipeline which clearly destroys the stability of the pipeline. The fourth aspect of the invention sets out to reduce this problem.

## Summary of the Invention

According to a first aspect of the invention there is provided a segment for forming part of a flexible blanket for protection or stabilisation of underwater structures and pipelines, unstable beds and embankments, the blanket comprising a plurality of segments arranged in one or more layers each one segment in height, the segments of the or each layer being disposed substantially contiguously at least at a median zone of their height dimension, each segment tapering substantially regularly from a maximum cross section at said median zone to a minimum cross section at one or both ends thereof and each segment being so bonded to each adjacent segment in the region of their respective median zones that the segments are held substantially contiguously but are free to pivot relative one to another about the bond insofar as is permitted by said taper, the arrangement of the tapers being such that each segment is capable of pivoting with more than one degree of freedom, in which each segment has a cross section of a regular polygon of even numbered side and in which each segment is bonded to its adjacent segments by a series of flexible connecting members, a flexible connecting member extending from the centre of each side of the segment at the median zone to the centre of the opposite side of the segment at the median zone, characterised in that the segment includes at least one hollow sleeve extending from the centre of one side of the segment at the median zone to the centre of the opposite side of the segment at the median zone, through which said sleeve, in use, a flexible connecting member may be passed.

Preferably each hollow sleeve is a plastics sleeve which can be moulded into the plastics shell of a segment.

It is possible to make each individual segment for the blanket on its own, with all the connecting members being threaded through hollow sleeves. In this case, segments will be supplied individually and a blanket of any desired size may be made to order by arranging the segments in a desired pattern with their median zones contiguous and then threading a series of ropes through the plastics tubes to form the completed blanket ready for use;

However it is preferred that each segment includes only one plastics sleeve.

This invention is applicable with particular advantage to segments which comprise a plastics shell filled with an infill.

In the case where the segments are hexagonal it is preferred that the segment shells are arranged with their edges contiguous; two sets of diagonal ropes are thread through the pre-drilled bores in the shells; a series of plastics tubes are thread through the segments, all parallel to one another; and the infill is then introduced into the shells.

Thus a blanket is produced in which the segments are all coupled together by the diagonal ropes, but not in all directions. Thus each segment is only coupled to four of its adjacent segments.

Such a segment can be readily coupled to a further such blanket to extend its length or width by laying the blankets with their plastics tubes lying end to end and then threading a linking rope straight through each path defined by the plastics tubes.

Moreover, if it is required to shorten the blanket the diagonals may be cut and then the linking ropes threaded through the plastics tubes.

This arrangement allows for easy tailoring of the blanket to a particular user's requirements.

In the case where the segment includes a plurality of hollow sleeves, initially no flexible connecting members need to be put into place until the setting of the segment has been completed.

Thus each segment may be produced individually and this means that each segment may be placed on a vibrating bed while the concrete around the hollow sleeve is being set so that a good hard set is produced. Moreover it means that the segments may be produced on a production line and each customer's needs may be provided exactly since the customer may make up his own blankets from a series of segments which he will have bought, or a prefabricated blanket can be dismantled or varied in width, length or shape.

The flexible connecting member may conveniently simply comprise a rope which may be a plastics material such as nylon, polypropylene, polyester or polyaramid.

In order to avoid the possibility of the blanket acting like "a string of beads" in the case of breakage of one of the segments between each pair of segments there may be provided a stop which cannot pass through the plastic sleeve and prevent the rope from being pulled through all the segments. This stop may most conveniently be formed by a knot in the rope.

Alternatively each connecting member may comprise a flexible member carrying at one end a female member and at the opposite end a male mating member; the arrangement being such that when the segments are placed so that their median zones are contiguous, the male member of one segment may be coupled to the female member of the adjacent segment to bond the two segments together such that the length of the flexible member lies between the two segments to allow the segments to pivot as far as the taper allows.

Preferably the male and female members are screw threaded members. In this case, in order for the male member to be coupled to the female member, one of the members will have to be rotated. Since the connecting member is mounted within a plastic sleeve it can easily rotate with respect to the sleeve.

Preferably the connecting members are slideably mounted within bores passing through the segment to allow for easier adjustment when connecting the segments together. In this case, preferably at least one end of the connecting member defines a collar of cross section greater than the cross section of the bore so that a stop is defined so that the connecting members cannot be pulled straight through the bores in all the segments when they have been coupled together.

Preferably the flexible member of the connecting member is steel rope so that it gives a good strength and flexibility.

It will be appreciated that in any embodiment of the first aspect of the invention in which the segments include more than one hollow sleeve that they all have to cross at the centre of the segment. In this case the hollow sleeves will not always define a straight line as they pass through the segment.

According to a second aspect of the invention there is provided a flexible blanket for protection or stabilisation of underwater structures and pipelines, unstable beds and embankments, the blanket comprising a plurality of segments arranged in one or more layers, each one segment in height, the segments of the or each layer being disposed substantially contiguously at least at a median zone of their height dimension, each segment tapering substantially regularly from the maximum cross section at said median zone to a minimum cross section at one or both ends thereof and each segment being so bonded to each adjacent segment in the region of their respective median zones that the segments are held substantially contiguously but are free to pivot relative one to another about the bond insofar as is permitted by said taper, the arrangement of the tapers being such that each segment is capable of pivoting with more than one degree of freedom, being characterised in that each segment includes a median zone which is a region of constant cross section lying between two spaced apart parallel planes.

Thus, a flat is defined at the median zone and so there is a plane of contact between two adjacent segments. Thus, adjacent segments are placed with their adjacent flats in contact which allows the segments to be pulled tightly together without any danger of one segment riding up over the edge of an adjacent segment.

According to a third aspect of the invention a flexible blanket for protection or stabilisation of underwater structures and pipelines, unstable beds and embankments, the blanket comprising a plurality of segments arranged in one or more layers, each one segment in height, the segments of the or each layer being disposed substantially contiguously at least at a median zone of their height dimension, each segment tapering substantially regularly from a maximum cross section at said median zone to a minimum cross section at one end thereof and each segment being so bonded to each adjacent segment in the region of their respective median zones that the segments are held substantially contiguously but are free to pivot relative one to another about the bond insofar as is permitted by said taper, the arrangement of the tapers being such that each segment is capable of pivoting with more than one degree of freedom, the blanket being characterised in that a plurality of segments which in use lie on a bend are formed such that the segment tapers non regularly from the median zone to its end which in use lies uppermost, the non regular taper being such that segment tapers steeply from the median zone upwards to a recess zone of reduced cross-section which extends to an upper zone; and then tapers again in the upper zone to the upper end of the segment, such that in a bend with the upper zones of the taper of two adjacent segments in contact a recess is defined at the recess zone in which debris may collect.

Thus, in this way if debris does fall on top of the flexible blanket and falls between adjacent segments when the flexible blanket is positioned on a bend there is no possibility of "nutcrackering" of debris between two adjacent segments since the debris will just lie in the recess zone.

According to a fourth aspect of the invention there is provided a flexible blanket for protection or stabilisation of underwater structures and pipelines, unstable beds and embankments, the blanket comprising a plurality of segments arranged in one or more layers, each one segment in height, the segments of the or each layer being disposed substantially contiguously at least at a median zone of their height dimension, each segment tapering substantially regularly from a maximum cross section at said median zone to a minimum cross section at one or both ends thereof and each segment being so bonded to each adjacent segment in the region of their respective median zones that the segments are held substantially contiguously but are free to pivot relative one to another about the bond insofar as is permitted by said taper, the arrangement of the tapers being such that each segment is capable of pivoting with more than one degree of freedom, being characterised in that the blanket comprises a central strip and at least one wing, the wing being made of segments which are smaller than the segments of the central strip and the bonds between adjacent segments in the wing being readily broken such that an anchor snagging on a wing causes breakage of the bonds of the wing rather than dislodgement of the entire blanket.

Thus, in this way, the blanket can be easily repaired by just connecting another wing to the central strip and at no time has the central strip become dislodged.

In the case where the segments are hexagonal, the wings are constructed on a rope network on which the diagonal ropes are much weaker than the ropes which, in use, run perpendicular to the length of the blanket which are strong enough and extend so far as to connect the wings to the central strip and form continuous lifting elements for handling and installing the blanket. The wings extend the width of the blanket and so aid erosion control but reduce the risk of anchor snagging. If an anchor does catch in one of the wings, the weaker bonds of the weaker ropes break at the point of stress before the outer wing and central strip become dislodged.

Fronds of artificial seaweed similar to the type sold by Linear Composites Limited of Harrogate, Yorkshire, England may advantageously be attached to selected segments of the blanket. This would encourage the natural build-up of a stabilised sandbank to produce increased protection and deflection capabilities.

Brief Description of the Drawings

Examples of flexible blankets in accordance with the four aspects of the invention will now be described, with reference to the accompanying drawings, in which:-

Figure 1 is a schematic perspective view of a segment of a type forming part of a flexible blanket described in UK Patent application number 2 156 941A;

Figure 2 is a schematic perspective view of a flexible blanket of the type described in UK Patent application number 2 156 941A;

Figure 3 is a schematic section through a second segment in accordance with the first aspect of the invention;

Figure 4 is a section through a third segment, in accordance with the first aspect of the invention;

Figure 5 is a section through two contiguous segments of Figure 4 showing the connection between them;

Figure 6 is a schematic section across the median zone of the segment shown in Figure 4;

Figure 7 is a section through a fourth segment in accordance with the second and third aspects of the invention;

Figure 8 is a section through two fourth segments shown in overbend;

Figure 9 is a section through three fourth segments shown in sagbend;

Figure 10 is a plan view of a second blanket in accordance with the fourth aspect of the invention;

Figure 11 is a section through the blanket of Figure 10;

Figure 12 is a section through the blanket of Figure 10 folded for storage and transportation;

Figure 13 is a schematic section of the second blanket in two alternative modes of function;

Figure 14 is a schematic perspective view of the method of formation of a third blanket;

Figure 15 is a plan view of the third blanket;   and

Figure 16 is a schematic section of the third blanket, in use.

## Description of the Preferred Embodiments

In the blankets and segments described, each segment is hexagonal cross-section.   The facilitates virtually consistent bending of the blanket in any direction through 360° which gives maximum flexibility of the blanket.

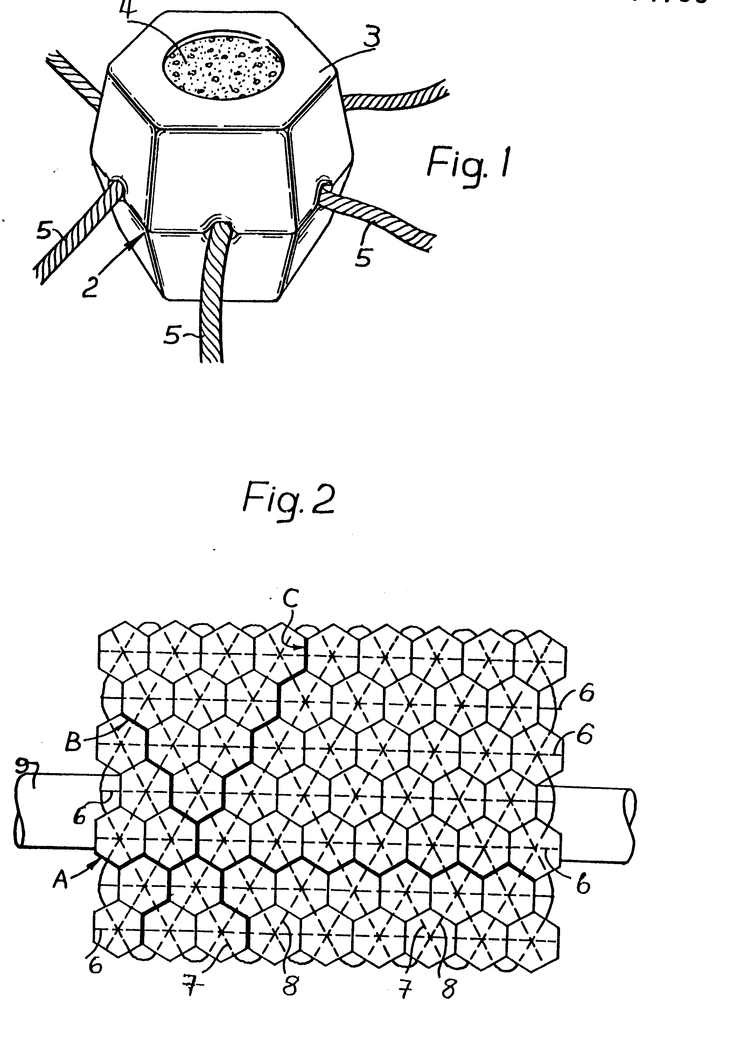

Figures 1 and 2 show schematically a first example of a segment and a blanket embodying the invention, described in UK Patent application number 2 156 941A.   These show the type of segment and blanket to which all aspects of the present invention apply. Each segment has a waist zone 2 where the segment is of maximum cross-sectional area.   It is at this point that each segment touches the next adjacent segment in the blanket.   The segments shown taper from the waist zone 2 toward each end to a predetermined degree.   Such segments can be used to make a blanket which will both sag-bend and over-bend as is required.

The taper is regular and the segment has minimum cross-section at each of its ends. The segment could equally be parallel-sided at one end and tapered at an angle between 20° and 30° toward the other end.

This would enable a blanket made of such segments to either sag-bend or over-bend depending on which way the segments are used.

The segment comprises a plastics shell 3 filled with an infill 4. Here the plastics shell 3 is blow moulded polyethylene and the infill 4 is concrete which is clearly denser than the material of the shell and provides the weight of the finished blanket.

The shell 3 includes a bore in its upper surface. This is used in making the segments. Once the rope network 5 is in place the concrete 4 is introduced into the shell 3 via the bore.

A blanket is made from these segments by providing a plurality of shells 3 arranged with their edges substantially contiguous. Each of the shells 3 has six holes bored in it to accommodate the rope network 5. The ropes 5 are threaded through the holes so that each plastic shell 3 is connected by a part of the rope network to each adjacent plastics shell. The shells 3 are then filled with concrete through bore which sets to hold the ropes 5 in place.

The segments are ideally in the range 86 to 170 mm side length at the waist, have a total height between 100 mm and 300 mm, a taper of 20° - 30° and are adapted to bend around radii down to approximately 200 mm in overbend, and down to approximately 400 mm in sagbend.

Each segment 1 is connected to its adjacent segment by bonding means which in this case comprises a flexible connecting member passing through the segment from the centre of one side of the segment at the median zone to the centre of the opposite side of the segment at the median zone. Such connecting members conveniently comprise ropes.

The segments are formed into blankets as shown in Figure 2. They are arranged with their median zones 2 touching and are held together by a network of ropes. Longitudinal ropes 6 extend parallely through the blanket.

Each of these ropes 6 extends through a line of segments. Each line of segments is connected to the next adjacent line by criss-crossing linking ropes 7 and 8.

The blanket shown in Figure 2 is formed of one layer, one segment in height. The segments are contiguous to each other so that the blanket may form a barrier to prevent, for example, erosion. The ropes 6, 7 and 8 bond each segment to six adjacent segments but the flexibility of the rope allows relative pivoting between adjacent segments to the limit allowed by the taper. The relative pivoting of each segment is in three non-perpendicular directions with respect to its adjacent segments. The flexibility by pivoting and by mutual twisting is through 360°. This great flexibility allows the blanket to be used in many different areas.

The blankets have a variety of functions including holding pipelines or structure in place underwater and protecting unstable beds and embankments.

In the mode shown in Figure 2 the pipeline 9 is of medium to large diameter. The longitudinal ropes 6 are arranged parallel to the pipeline 9. Here the crosslinking ropes 7 and 8 are unbroken throughout the length of the blanket and forms loops at the blanket edge.

The lifting of the blanket is effected via the loops, and the strength needed results in the overall tensile strength of the blanket being very high. In this mode the flexibility parallel to the direction of the pipeline is controlled by the pivoting between simple angles but perpendicular to the pipeline it is controlled by a compound and therefore larger angle.

This method suits pipeline protection in that the flexibility across the pipeline is greater than the flexibility along the length.

Shown in thicker black line are the lines of reduced mechanical resistance A, B or C across the surface of the blanket. It can be seen that these three lines are parallel to ropes 6, 7 and 8.

One of these lines A lies generally parallel to the pipeline and so only two lines B and C could relate to possible anchor or construction line abrasion.

If required it is possible to lay adjacent blankets in abutting relationship with the joints mocked by the profile of the castellated ends. In practice this can be difficult to achieve, especially in underwater operations where it can be difficult to achieve accurate control.

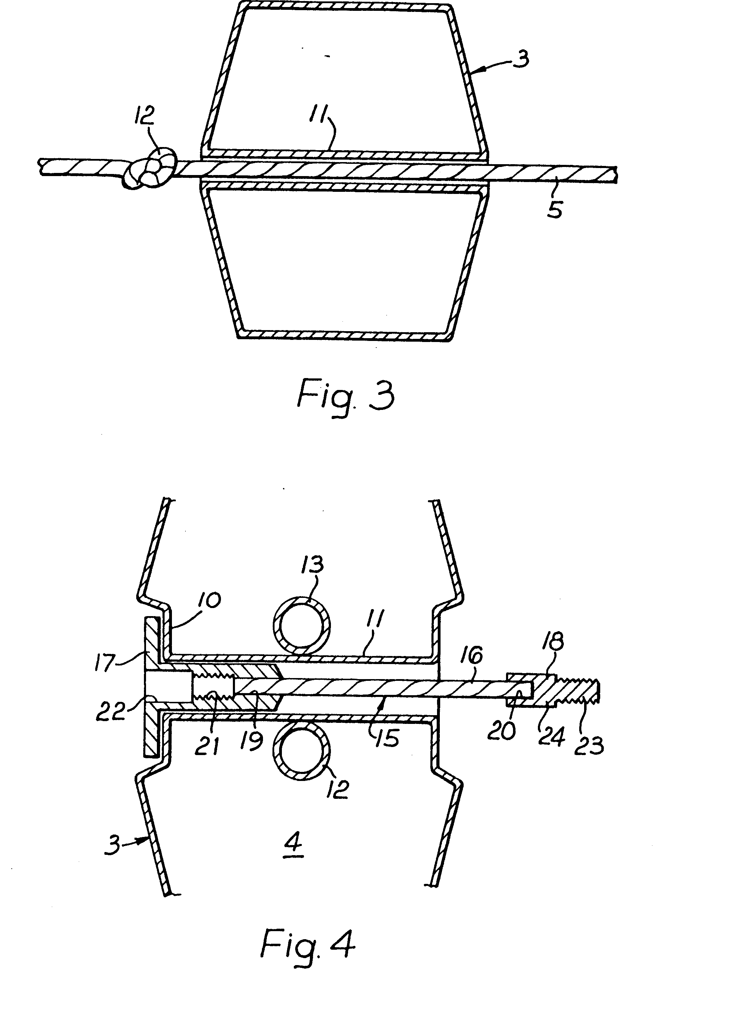

A second and a third segment in accordance with the first aspect of the invention are arranged similarly to the first segment in that they both comprise outer plastics shell 3 to be eventually filled by dense concrete 4. The cross section of the segment is hexagonal and at the median zone of the segment there is defined a bell shaped depression 10 (not shown on Figure 3) at the centre of each side. The segment here described tapers from the median zone to both of its ends but the invention is applicable to a segment which tapers from the median zone to only one of its ends.

In the second segment, in use, a flexible connecting member 5 extends from the centre of each side of the segment at the median zone to the centre of each opposite side of the segment at the median zone. However, extending from one side only is a hollow plastics sleeve 11 through which a rope 5 may subsequently be passed.

In use a blanket may be made up with the segments as shown in Figure 3 with the plastics sleeves 11 aligned so that each segment is only attached to four adjacent segments. In order to make up a blanket of required size, a customer buys an appropriate number of small blankets, lays them with the hollow sleeves 11 end to end and then threads a rope through to hold the blanket together to complete the structure. A knot 12 is formed between each pair of adjacent segments which stops the rope 5 from being pulled through the sleeve 11 in the case of a break in either the rope 5 or a segment.

In a third segment, a plastics liner sleeve 11 defines a bore passing through the segment from the centre of one bell shaped opening 10 to the opposite bell shaped opening 10 on the opposite side of the segment. Two other sleeves 13 and 14 also pass through the segment but these do not define a straight path since they have to avoid the other sleeve 11 at the centre of the segment.

Rotatably and slideably mounted within the sleeves is connecting member 15. The connecting member 15 includes a flexible member 16 which, in this case, comprises a steel rope connected at one end to a female member 17 and connecting at its opposite end to a male mating member 18.

The female and male members 17 and 18 both comprise circular cylindrical members each including a circular cylindrical bore 19 and 20 respectively into which an end of the steel rope 16 is crimped to lock it into place. The female member 17 includes a screw threaded bore 21 and an enlarged cylindrical region 22.

The male member 18 comprises a cylindrical screw threaded portion 23 and an enlarged cylindrical portion 24. At the end of the female member remote from the rope 9 is an enlarged collar which is hexagonal shaped. This defines a stop so that the connecting member may not be pulled out of the segment and provides a head which can be gripped by a spanner to screw the male member 18 into a female member.

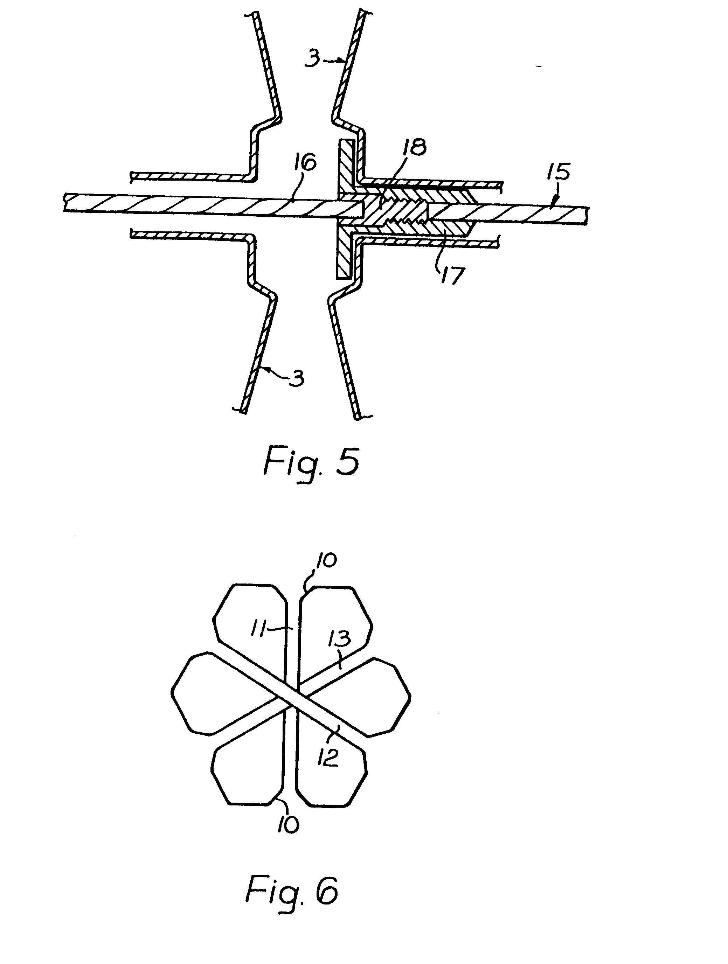

The connection between two contiguous segments is shown in detail in Figure 5. The length of connecting member 15 is such that when the male member 18 of one segment is screw threadedly engaged with the female member 17 of a contiguous segment to lock them together, a length of rope 16 extends between the two segments to allow the two segments to pivot with respect to one another as far as the taper allows.

Thus, a very flexible system is produced whereby a customer can buy in the number of segments that he requires and then make them up into the desired shape of blanket that he needs.

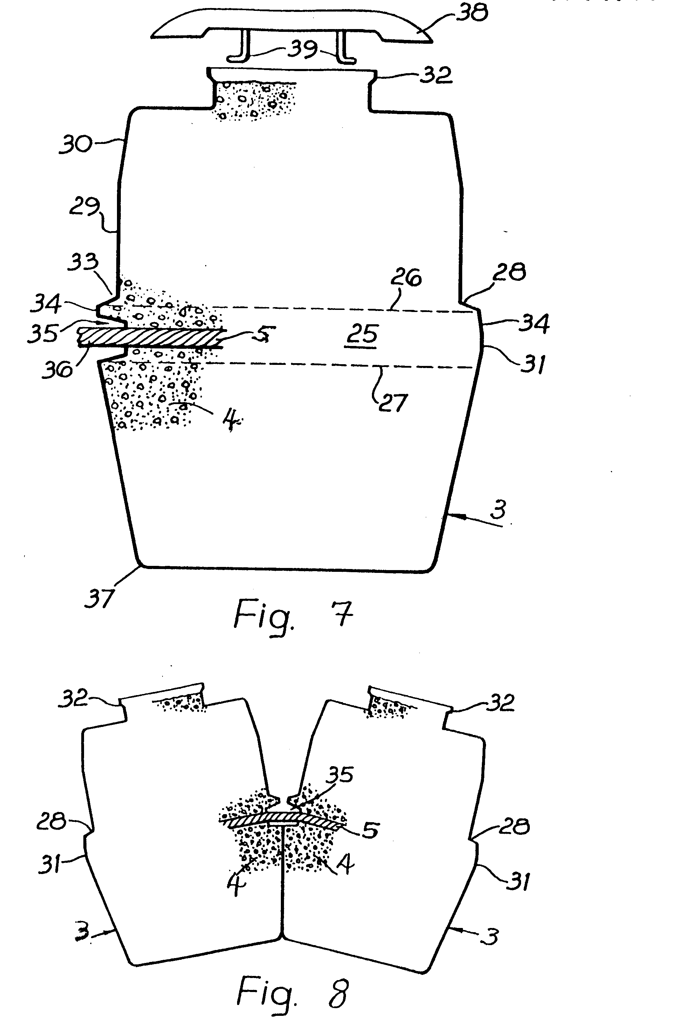

Figures 7 to 9 show in detail a fourth type of segment for making blankets embodying second and third aspects of the invention.

The segment comprises a blow moulded polyethylene shell 3 of thickness 1 mm to 2 mm. Within the shell 3 is a concrete 4 which provides a dense infill for the shell 3 and also serves to hold ropes 5 in position.

It will be appreciated that the sections are not taken through the centre of the segment but are off centre to that the median zone is shown, at the point of entry of the rope 5 and away from the point of entry of the rope.

As can be seen from the Figures the median zone does not comprise a single plane but a zone 25 between two substantially parallel planes 26 and 27. The cross-sectional area of the segment is at a maximum at the median zone and tapers regularly towards one end which is the base as shown in Figure 7. Towards the other end of the segment (the top of the segment, in Figure 7) the cross section has a reduced portion to form a shoulder 28, a recess zone 29 and an upper tapered region 30.

Within median zone 25 is defined a 'flat' 31 of constant cross-section along the face of a segment to either side of the point of entry of the rope 24 aligned with rope 24. The flat 31 is 5 mm in height.

When a blanket is formed, the segment shells 3 are arranged contiguously with ropes 5 extending through them. The ropes 5 are pulled tightly to pull the segments in closely together. The flats 31 come into contact and prevent the edge of one segment riding up over the edge of an adjacent segment.

Once this has been done the concrete filler 4 can be introduced. It is introduced via collar 32. The concrete 4 is then allowed to set. The shell 3 retards the set of the concrete 4 to strengthen it. Once set, the rope 5 is held firmly in position.

The non-regular taper is such that the segment tapers steeply from the median zone 34 upwards to the recess zone 29, of reduced cross-section which extends to the upper zone 30 where it tapers again.

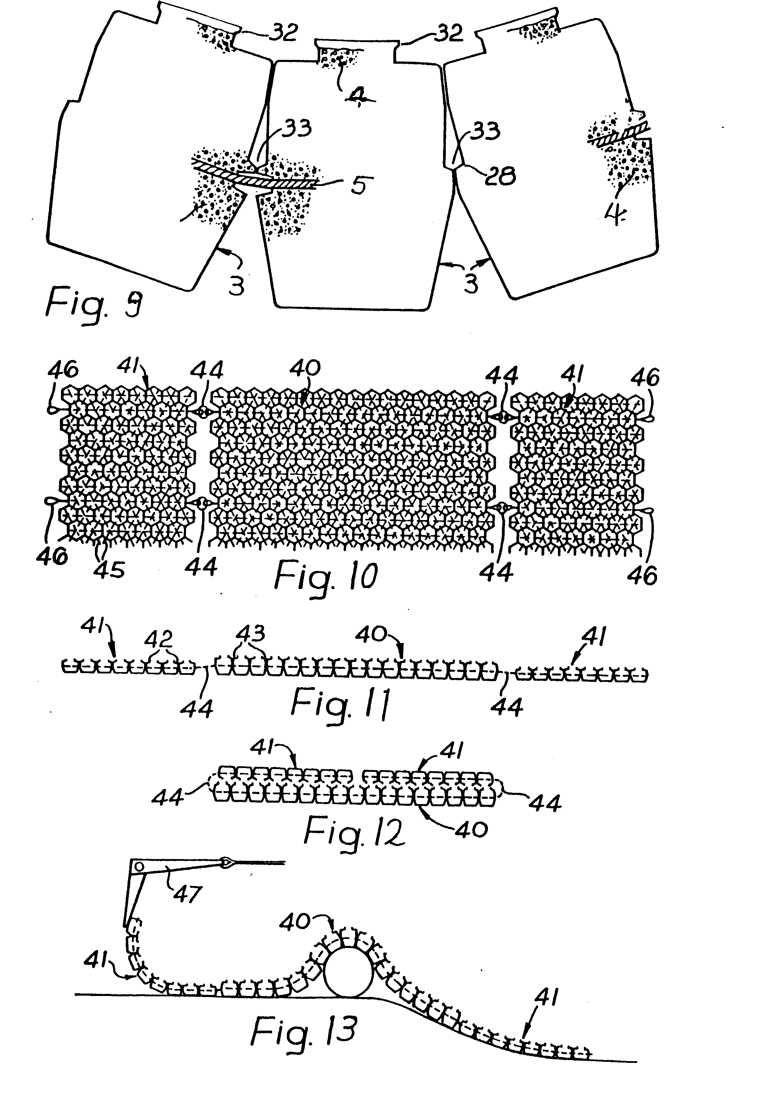

The shoulder 28 forms a recess 33 between adjacent segments, when the segments are in sagbend as shown in Figure 10. Thus the segment walls are not pushed against any debris between the segments. The debris can lie within recess 33 without being "nutcrackered" between shell walls 3.

As can be seen the median zone 25 includes part of a taper 34 aligned with tapered end 30 so that in sagbend pivoting of the segments may occur.

At the point of entry of rope 24 is defined a bell-mouth 35 which prevents rubbing or abraiding of the rope 36 lying between adjacent segments. It creates a 'free' distance within which the rope flexibility can act.

As can be seen in Figure 8 the segments are efficient in overbend.

Each corner 37 of the segment is radiused to reduce any stress on the concrete when the segments compress as the blanket is draped.

An addition to the segments is shown schematically in Figure 7. If the blanket is to be used in a situation where extreme protection against abrasive hazard of anchor or construction lines dragging across the top of the pipeline it is possible to fit steel caps 38 to the collars 32. Legs 39 can be embedded into the concrete 23 to affix the cap in position to produce an impermeable studded surface.

Figures 10 to 13 show a second example of a blanket embodying the fourth aspect of the invention. This comprises a central strip 40 which forms the main protection panel coupled on each side to a wing 41 comprising segments 42 of smaller size and weight than segments 43 of the main central strip 40.

Here the height of the smaller segments 42 is 100 mm.

The wings 41 are coupled to the central strip 40 by loose hinges 44 which allow the wings to be folded over on top of central stip 40 for easy stacking and transportation. To do this it is necessary for the width of each wing 41 to be less than half the width of central strip 40.

The folded blanket can be lifted by a single beam for transportation. A spreader frame slightly wider than central strip 40 is used in installation of the blanket to ensure that wings 41 fold outwards.

If an anchor 47 snages in one of the wings 41 the wing 41 lifts until the diagonal tie ropes 45 break which causes the anchor to flip clear.

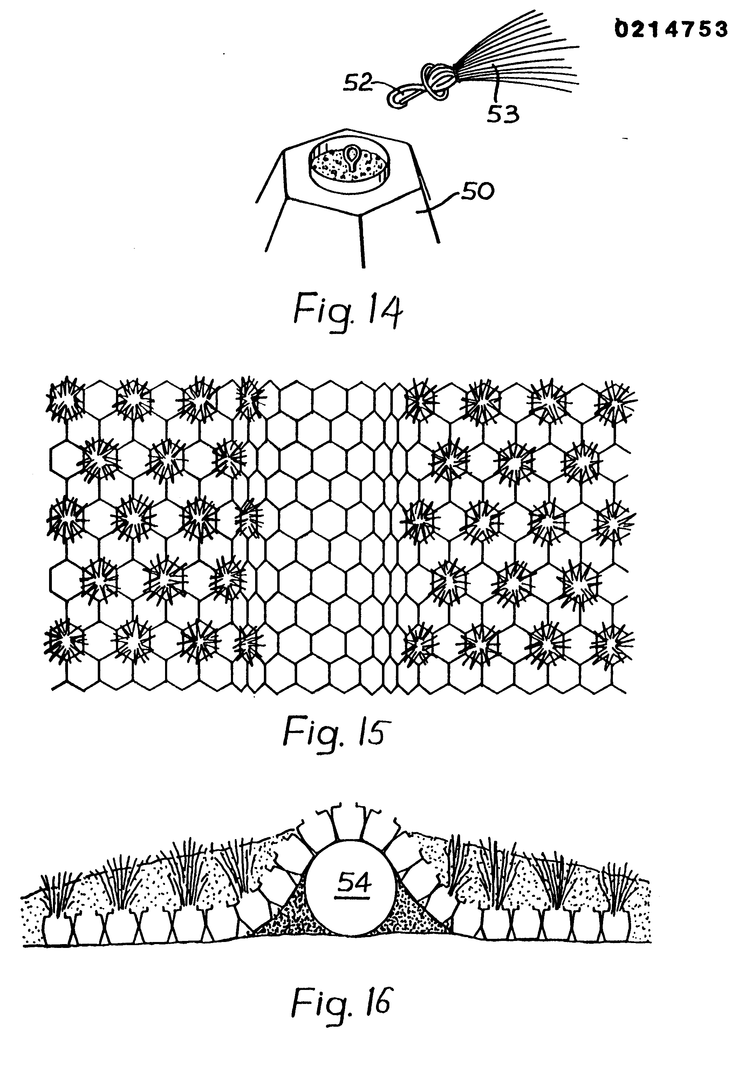

Another function of this blanket is erosion control as shown in the righthand side of Figure 14. Here the wings 41 have increased the width of the blanket to increase erosion control. However, because the segments 42 are so small they are of lower cost than the segments 43 of the main central strip 40.

In a third blanket which is a modification applicable to all the above described embodiments, selected segments 50 have embedded in the concrete an eye 51. Onto eye 51 is hooked via spring biased hook 52 fronds 53 of artificial buoyant seaweeds similar to that sold by Linear Composites Limited of Harrogate, Yorkshire, England.

The frond bundles 53 are buoyant and tend to stand upright, thus interrupting currents flowing over the blanket. This causes sediment in suspension to settle in and around the fronds 53 to form a stabilised sand bank as shown in Figure 5.

This gives better protection to the pipeline 54. It is not necessary to attach fronds 53 to each segment but a grid pattern such as shown in Figure 16 gives advantageous results.

**0214753**

1.        A segment (1) for forming part of a flexible blanket for protection or stabilisation of underwater structures and pipe lines, unstable beds and embankments, the blanket comprising a plurality of segments (1) arranged in one or more layers each one segment in height, the segments of the or each layer being disposed substantially contiguously at least at a median zone of their height dimension, each segment tapering substantially regularly from a maximum cross section at said median zone (2) to a minimum cross section at one or both ends thereof and each segment being so bonded to each adjacent segment in the region of their respective median zones that the segments are held substantially contiguously but are free to pivot relative one to another about the bond in so far as is permitted by said taper, the arrangement of the tapers being such that each segment is capable of pivotting with more than one degree of freedom, in which each segment has a cross-section of a regular polygon of even numbered side and in which each segment is bonded to its adjacent segments by a series of flexible connecting members (5) a flexible connecting member extending from the centre of each side of the segment at the median zone (2) to the centre of the opposite side of the segment at the median zone (2), characterised in that the segment includes at least one hollow sleeve (11) extending from the centre of one side of the segment at the median zone to the centre of the opposite side of the segment at the median zone, through which said sleeve in use a flexible connecting member (5) may be passed.

2.        A segment according to Claim 1, further characterised in that it includes only one hollow sleeve (11).

3.        A flexible blanket comprising a plurality of segments in accordance with Claim 2 characterised in that the sleeves (11) of all the segments are arranged parallel to one another.

4.        A flexible blanket comprising a plurality of segments according to Claim 2 or 3, in which each connecting member (15) comprises a flexible member (16) carrying at one end a female member (17) and at the opposite end a male mating member (18), the arrangement being such that when the segments are placed with their median zones contiguous the male member (18) of one segment may be coupled to the female member (17) of the adjacent segment to bond the two segments together such that the length of flexible member (16) lies between the two.

5.        A flexible blanket for protection or stabilisation of underwater structures and pipe lines, unstable beds and embankments, the blanket comprising a plurality of segments arranged in one or more layers each one segment in height, the segments of the or each layer being disposed substantially contiguously at least at a median zone of their height dimension, each segment tapering substantially regularly from a maximum cross-section at said median zone to a minimum cross-section at one or both ends thereof and each segment being so bonded to each adjacent segment in the region of their respective median zones that the segments are held substantially contiguously but are free to pivot relative one to another about the bond in so far as is permitted by said taper, the arrangement of the tapers being such that each segment is capable of pivotting with more than one degree of freedom, characterised in that each segment includes a median zone (25) which is a region of constant cross-section lying between two spaced apart parallel planes(26, 27).

6.        A flexible blanket for protection or stabilisation of underwater structures and pipe lines, unstable beds and embankments, the blanket comprising a pluality of segments arranged in one or more layers each one segment in height, the segments of the or each layer being disposed substantially contiguously at least at a median zone of their height dimension, each segment tapering substantially regularly from a maximum cross-section at said median zone to a minimum cross-section at one end thereof and each segment being so bonded to each adjacent segment in the region of their respective median zones that the segments are held substantially contiguously but are free to pivot relative one to another about the bond in so far as is permitted by said taper, the arrangement of the tapers being such that each segment is capable of pivotting with more than one degree of freedom, is characterised in that a plurality of segments which in use lie on a bend are formed such that the segment tapers non-regularly from the median zone to its end which in use lies uppermost, the non-regular taper being such that the segment tapers steeply from the median zone upwards to a recess zone of reduced cross-section which extends towards an upper zone; and then tapers again in the upper zone to the upper end of the segment, such that in a bend with the upper zones of the taper of two adjacent segments in contact, a recess is defined at the recess zone in which debris may collect.

7.      A flexible blanket for protection or stabilisation of underwater structures and pipe lines, unstable beds and embankments, the blanket comprising a plurality of segments arranged in one or more layers each one segment in height, the segments of the or each layer being disposed substantially contiguously at least at a median zone of their height dimension each segment tapering substantially regularly from a maximum cross-section at said median zone to a minimum cross-section at one or both ends thereof and each segment being so bonded to each adjacent segment in the region of their respective median zones that the segments are held substantially contiguously but are free to pivot relative one to another about the bond in so far as is permitted by said taper, the arrangement of the tapers being such that each segment is capable of pivotting with more than one degree of freedom, characterised in that the blanket comprises a central strip and at least one wing, the wing being made of segments which are smaller than the segments of the central strip, and the bonds between adjacent segments in the wing being readily broken such that

0214753

an anchor snagging on a wing causes breakage of the bonds of the wing rather than dislodgement of the entire blanket.

8.      A blanket according to any of Claims 3 to 7 in which fronds of artificial seaweed are attached to some of the segments.

9.      A blanket according to Claim 8, in which each frond of artificial seaweed is attached to a releasable hook, and some segments include an eye onto which a hook may attach.

Fig. 1

Fig. 2

Fig. 3

Fig. 4

Fig. 5

Fig. 6

0214753

Fig. 7

Fig. 8

Fig. 9

Fig. 10

Fig. 11

Fig. 12

Fig. 13

0214753

52

53

50

Fig. 14

Fig. 15

54

Fig. 16